# EUROPEAN PATENT APPLICATION

(11) **EP 1 833 273 A1**
(43) Date of publication of application: **12.09.2007**
(21) Application number: 06110900.5
(22) Date of filing: 09.03.2006
(51) Int. Cl.: H04Q 7/34

(54) **Monitoring system, communications service emulation apparatus, and method of monitoring a communications service**

(71) Applicant: Agilent Technologies, Inc., Santa Clara, CA 95051 (US)
(72) Inventor: Azad, Gulzar, Agilent Techn. (International) Private Limited, Haryana (IN)
(74) Representative: Kay, Ross Marcel

(57) **Abstract**

A monitoring system (100) comprises a mobile terminal (106) attached to a communications network (102) via a wireless interface (110). The mobile terminal (106) is capable of operations in relation to a communications service, for example a Push-To-Talk (PTT) service. A second communications terminal (104) is also attached to the communications network (102) and via the wireless interface (110). The second communications terminal emulates a server to support, for example the PTT service. The second communications terminal (104) comprises a number of pre-stored responses to messages the receipt of which is anticipated from the mobile terminal (106).

## Description

The present invention relates to a monitoring system of the type, for example, that measures performance of a communications service, such as Quality of Service (QoS). The present invention also relates to a communications service emulation apparatus of the type, for example, that is capable of receiving a communication in relation to a communications service to be tested. The present invention further relates to a method of monitoring a communications service of the type, for example, that measures performance of the communications service, such as QoS.

In the field of communications services, particularly wireless communications services, it is known to test a communications service actively by instantiating a mobile client side test application that communicates with an application infrastructure supporting the communications service in a communications network of a service provider. The application infrastructure therefore includes a server that supports the communications service for mobile communications devices.

One known test system for wireless communications networks is a so-called "Wireless QoS Manager" (WQM) application available from Agilent Technologies, Inc. The WQM application provides availability and quality of service information in relation to wireless services supported in the communications network of the service provider. The WQM application sets up a number of wireless interfaces for application testing and uses the number of wireless interfaces to simulate mobile devices in the communications network. However, a service provider of the communications service cannot use the WQM application for a QoS analysis or testing of a new communications service over the communications network prior to deployment of the new communications service, because the WQM application (or other similar test applications) configuration requires "live" servers that provide the communications service to mobile devices and so to use the WQM application to test error conditions or test alert mechanisms requires the WQM application to wait for a live service to fail. Further, since the live server is used for testing, it is not possible to force error conditions so that the communications service can be tested; forcing error conditions in a live communications service will not be tolerated by network operators.

Additionally, whilst the WQM application can capture data from the live server supporting the communications service, the WQM application cannot discover packets sent to the live server. Capture of data sent to the live server can prove useful for research and development purposes where a new communications service is introduced and a test application needs to be developed.

According to a first aspect of the present invention, there is provided a monitoring system for monitoring a communications service, the system comprising: a first communications terminal for attachment to a communications network via a first communications interface, the first communications terminal being arranged to support, when in use, client-side functionality of a communications service to be tested; and a second communications terminal for attachment to the communications network via a second communications interface, the second communications terminal being arranged to emulate, when in use, a communications server at least sufficiently to receive a communication from the first communications terminal in relation to the communications service to be tested.

The first communications terminal may be a mobile communications terminal. The second communications terminal may be portable.

The second communications terminal may be further arranged to support, when in use, server-side functionality of the communications service to be tested.

The second communications terminal may be further arranged to record, when in use, a protocol data unit received from the first communications terminal.

The first communications terminal may support a test application. The test application may be a software agent.

The test application may be arranged to send at least one server-bound protocol data unit in relation to the communications service to be tested in order to measure a Quality of Service associated with the communications service to be tested.

The second communications terminal may be arranged to emulate an error condition in relation to the communications service to be tested.

The second communications terminal may be arranged to generate at least one client-bound protocol data unit implementing the error condition. The at least one client-bound protocol data unit may be responsive to the first communications terminal.

The first communications terminal may be manually operated, when in use.

The second communications terminal may be arranged to be responsive, when in use, to the first communications terminal with at least one pre-prepared response.

The second communications terminal may be arranged to behave, when in use, at least in part as a client terminal in order to procure a network address for identification of the second communications terminal in the communications network. The second communications terminal may be arranged to modify behaviour thereof following procurement of the network address so as to emulate, when in use, the communications server.

According to a second aspect of the present invention, there is provided a communications service emulation apparatus comprising: an input arranged to receive, when in use, a communication relating to a communications service to be tested from a communications terminal attached to a communications network via a first communications interface; a processing resource for attachment to the communications network via a second communications interface, the processing resource being arranged to emulate, when in use, a communications server at least sufficiently to receive the communication.

The processing resource may be further arranged to communicate, when in use, a pre-prepared response to the communications terminal in response to the communication.

The processing resource may be arranged to exhibit, when in use, behaviour corresponding at least in part to a client terminal in order to procure a network address for identification of the apparatus in the communications network. The processing resource may be arranged to modify behaviour thereof following procurement of the network address so as to emulate, when in use, the communications server.

According to a third aspect of the present invention, there is provided a method of monitoring a communications service, the method comprising the steps of: attaching a first communications terminal to a communications network via a first communications interface; the first communications terminal supporting client-side functionality of a communications service to be tested; attaching a second communications terminal to the communications network via a second communications interface; and the second communications terminal emulating a communications server at least sufficiently to receive a communication from the first communications terminal in relation to the communications service to be tested.

The method may further comprise the step of: the second communications terminal communicating a pre-prepared response to the first communications terminal in response to the communication.

According to a fourth aspect of the present invention, there is provided a computer program code element comprising computer program code means to make a computer execute the method as set forth above in relation to the third aspect of the present invention.

The computer program code element may be embodied on a computer readable medium.

It is thus possible to provide a monitoring system, a communications service emulation apparatus and/or a method of monitoring a communications service that enables pre-deployment testing of a communications service, thereby obviating a need for a live communications service to be operational prior to testing. Additionally, server emulation can take place from any location in the communications network or indeed from any communications network. Further, testing of the communications service is independent of an underlying carrier mechanism of the communications network as well as an application infrastructure of a network operator. Using the monitoring system, the communications service emulation apparatus and/or the above mentioned method, it is also possible to create conditional scenarios, for example Wireless Application Protocol (WAP) browsing with all cached contents, or voice latency constituting a voice error. Hence, it can be seen that, for example, WAP, Java Download or Push-to-Talk virtual application test systems can be deployed. In addition, capture of live packets relating to the communications service from mobile terminals, as opposed to simulations thereof, facilitates rapid development and understanding of client terminal behaviour, particularly mobile client terminal behaviour. Furthermore, data verification and/or protocol discovery relating to the communications service is possible, the latter facilitating rapid test application development, such as WQM application development.

At least one embodiment of the invention will now be described, by way of example only, with reference to the accompanying drawings, in which:
**Figure 1** is a schematic diagram of a first monitoring system used in relation to a first embodiment and a second embodiment of the invention;
**Figure 2** is a flow diagram of a first part of a first method of monitoring a communications service used by a communications service emulation apparatus of Figure 1 in relation to the first embodiment of the invention;
**Figure 3** is a flow diagram of a second part of the first method of monitoring the communications service used by a client communications terminal of Figure 1 in relation to the first embodiment of the invention;
**Figure 4** is a flow diagram of a first part of a second method of monitoring the communications service used by the communications service emulation apparatus of Figure 1 in relation to the second embodiment of the invention;
**Figure 5** is a flow diagram of a second part of the second method of monitoring the communications service used by the client communications terminal of Figure 1 in relation to the second embodiment of the invention;
**Figure 6** is a schematic diagram of a second monitoring system used in relation to a third embodiment of the invention;
**Figure 7** is a flow diagram of a first part of a third method of monitoring the communications service used by the client communications terminal of Figure 6 in relation to the third embodiment of the invention; and
**Figure 8** is a flow diagram of a second part of the third method of monitoring the communications service used by the communications service emulation apparatus of Figure 6 in relation to the third embodiment of the invention.

Throughout the following description identical reference numerals will be used to identify like parts.

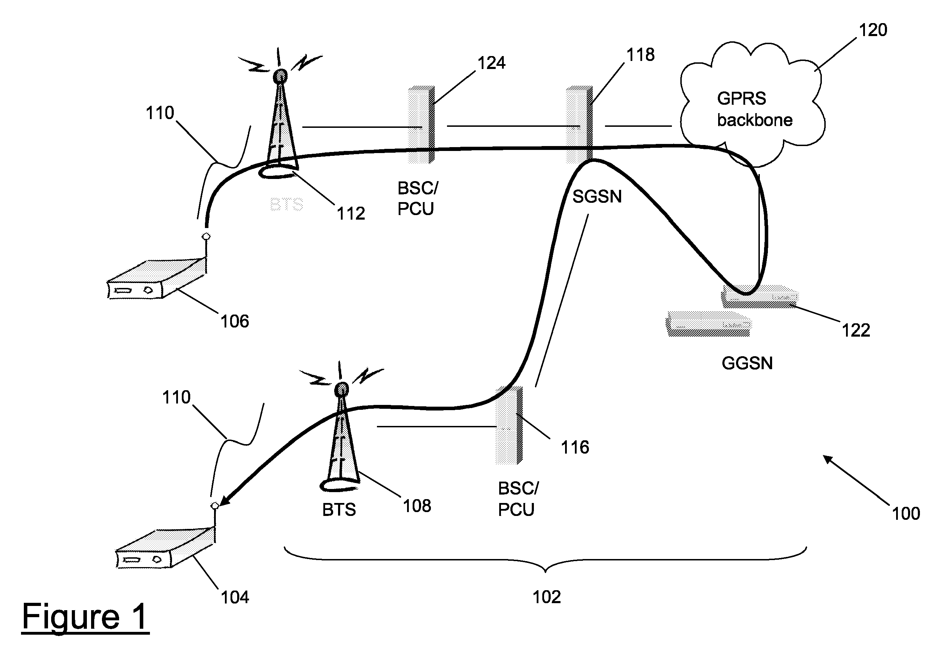

Referring to Figure 1, a monitoring system 100 comprises a communications network 102, for example a Global System for Mobile communications (GSM) network supporting a General Packet Radio Service (GPRS), and a first wireless terminal 104 and a second wireless terminal 106. The first wireless terminal 104 is "attached" to the network 102 by a first base station 108 via a wireless interface 110 between the first wireless terminal 104 and the first base station 108. The second wireless terminal 106 is "attached" to the network 102 by a second base station 112 also via the wireless interface 110.

Although not shown, the first terminal 104 comprises input and outputs coupled to a processing resource; the processing resource is programmed to function in a manner that is described later herein in order to serve as a "virtual" server. The second terminal 106 is, in this example, a mobile communications handset that supports a number of communications services, for example a Wireless Application Protocol (WAP) service, a Java^{®} download service and/or a Push-To-Talk (PTT) service. Additionally, in this example, the second terminal 106 supports a software test agent (not shown) that is part of a Wireless Quality of Service Manager (WQM) application produced by Agilent Technologies, Inc.

In order for the first terminal 104 to be able to communicate with the second terminal 106, the first and second base stations 108,112 are coupled to other functional elements of the communications network 102. For the sake of conciseness and clarity of description, only those functional elements directly involved in an interoperation between the first and second terminals 104, 106 are described herein. However, the skilled person will appreciate that the network 102 comprises other functional elements that can be used in support of any communications between the first and second terminals 104, 106.

The first base station 108 is coupled to a first Base Station Controller (BSC) 116 that also has functionality so as to serve as a first Packet Control Unit (PCU) for supporting the GPRS. The first BSC 116 is coupled to a Serving GPRS Support Node (SGSN) 118, the SGSN 118 being coupled to a GPRS backbone network 120 and a Gateway GPRS Support Node (GGSN) 122. The GGSN 122 is also coupled to the GPRS backbone network 120, and the SGSN 118 is coupled to a second BSC 124, the second BSC 124 also serving as a second PCU for supporting the GPRS. The second BSC 124 is coupled to the second base station 112.

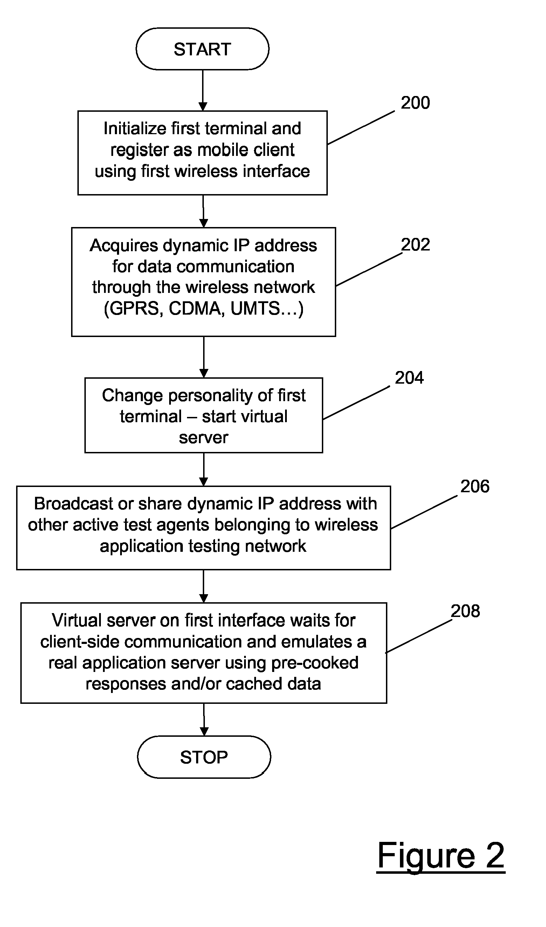

In operation (Figure 2), the first terminal 104 is powered-up and initialises (Step 200) as a mobile client terminal and registers with the network 102 as the mobile client terminal via the wireless interface 110. Thereafter, the first terminal 104 acquires (Step 202) a dynamic Internet Protocol (IP) address for data communication from the communications network 102 via the wireless interface 110. Once the dynamic IP address has been obtained, the first terminal 104, supported by its processing resource, changes "personality" (Step 204), i.e. no longer behaves as the client terminal. Instead, the first terminal 104 functions as a virtual or "thin" server for testing purposes, in particular for testing a communications service, for example, the PTT service mentioned above prior to deployment of the PTT service by an operator of the network 102.

The first terminal 104, constituting, a wireless testing device, then broadcasts (Step 206) the acquired dynamic IP address to active test agents residing in wireless communications devices, for example the second communications terminal 106. From this, the skilled person will appreciate that testing of the communications service typically involves a number of communications devices respectively supporting the active test agents. However, for the sake of simplicity and clarity of description only the active test agent of the second terminal 106 is described herein.

In this example, the first terminal 104 comprises so-called "pre-cooked", or pre-prepared, responses to messages received from the active test agents, for example the active test agent of the second terminal 106. The first terminal 104 also comprises cached data that can be used to respond to messages received from the second terminal 106. In this respect, the pre-cooked responses and/or cached data constitute a set of prepared responses to messages the reception of which is anticipated, the set of responses having been prepared for diagnostic purposes. Hence, it can be seen that the first terminal 104 does not constitute a real server to support the communications service and only possesses a limited repertoire of fixed responses. The functionality of the first terminal 104, in the context of supporting the communications service, does not result in the provision of the communications service.

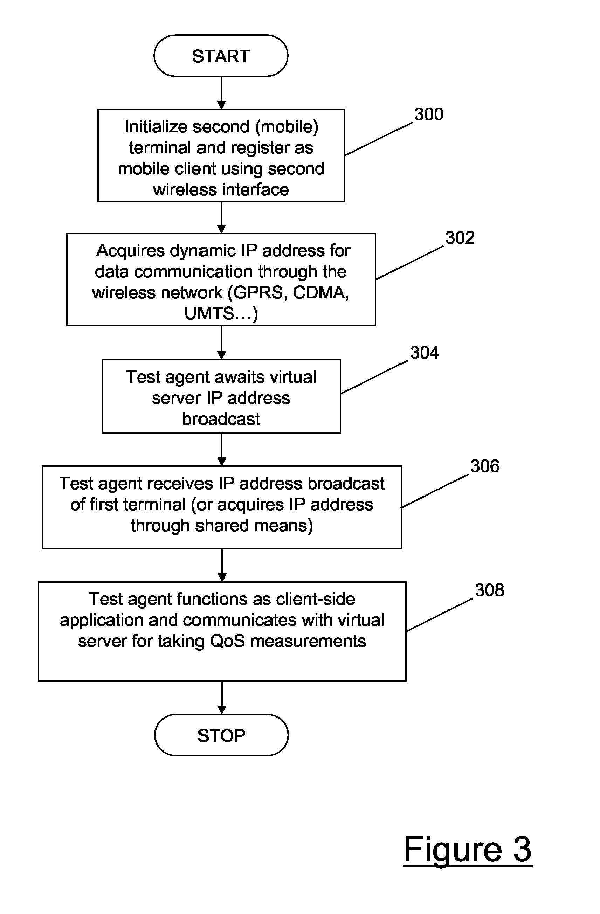

Turning to Figure 3, the second terminal 106 is powered-up and the active test agent is instantiated. Thereafter, the second terminal 106 registers (Step 300) with the communications network 102 as another mobile client terminal. The second terminal 106 then acquires (Step 302) another dynamic IP address from the network 102, and then awaits (Step 304) the broadcast of the dynamic IP address from the first terminal 104. Eventually, the second terminal 106 receives (Step 306) the broadcast dynamic IP address from the first terminal 104. Once the dynamic IP address has been received, the active test agent of the second terminal 106, believing the first terminal 104 to be a "live" PTT server supporting the PTT service, sends (Step 308) test messages to the first terminal 104 at the dynamic IP address broadcast by the first terminal 104. Consequently, referring back to Figure 2, upon receipt of at least one packet or a message from the active test agent of the second terminal 106, the first terminal 104, accesses a pre-cooked response or cached data and sends (Step 208) the pre-cooked response or cached data back to the second terminal 106, the pre-cooked response being stored by the first terminal 104 as an appropriate response to the at least one packet or message.

Upon receipt of the pre-cooked response or cached data, the active test agent of the second terminal 106 derives measurement data based upon the response received from the first terminal 104. Subsequently, the derived measurement data is, in this example, communicated by the active test agent of the second terminal 106 to a central Operations Support Systems (OSS) (not shown), or another monitoring and measurement central system (if available), in the network 102 for storage, generation of reports and/or further analysis thereof.

In another embodiment, the first terminal 104 is used to simulate one or more error conditions. In this respect, the monitoring system 100 of Figure 1 operates as follows.

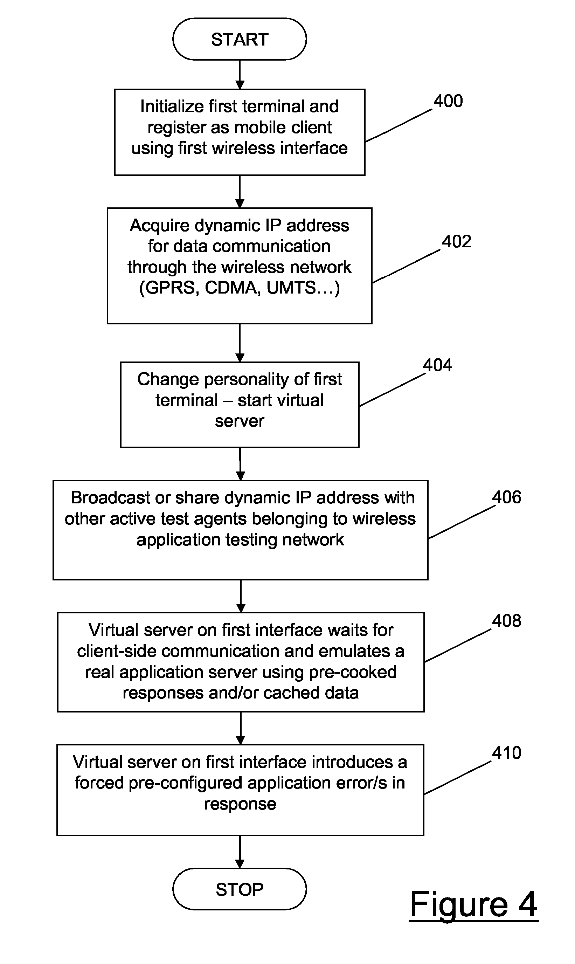

Referring to Figure 4, the first terminal 104 is powered-up and initialises (Step 400) as a mobile client terminal and registers with the network 102 as the mobile client terminal via the wireless interface 110. Thereafter, the first terminal 104 acquires (Step 402) a dynamic Internet Protocol (IP) address for data communication from the communications network 102 via the wireless interface 110. Once the dynamic IP address has been obtained, the first terminal 104, supported by its processing resource, changes "personality" (Step 404), i.e. no longer behaves as the client terminal. Instead, the first terminal 104 functions as a virtual or "thin" server for testing purposes, in particular for testing a communications service, for example, the PTT service mentioned above prior to deployment of the PTT service by an operator of the network 102.

The first terminal 104, constituting, a wireless testing device, then broadcasts (Step 406) the acquired dynamic IP address to active test agents residing in wireless communications devices, for example the second communications terminal 106. From this, the skilled person will appreciate that testing of the communications service typically involves a number of communications devices respectively supporting the active test agents. However, for the sake of simplicity and clarity of description only the active test agent of the second terminal 106 is described herein.

In this example, the first terminal 104 still comprises so-called "pre-cooked", or pre-prepared, responses to messages received from the active test agents, for example the active test agent of the second terminal 106. The first terminal 104 also comprises the cached data. In this respect, the pre-cooked responses and/or cached data also constitute a set of prepared responses to messages the reception of which is anticipated, the set of responses having been prepared for diagnostic purposes. Hence, it can be seen that the first terminal 104 still does not constitute a real server to support the communications service and only possesses a limited repertoire of fixed responses. The functionality of the first terminal 104, in the context of supporting the communications service, does not result in the provision of the communications service.

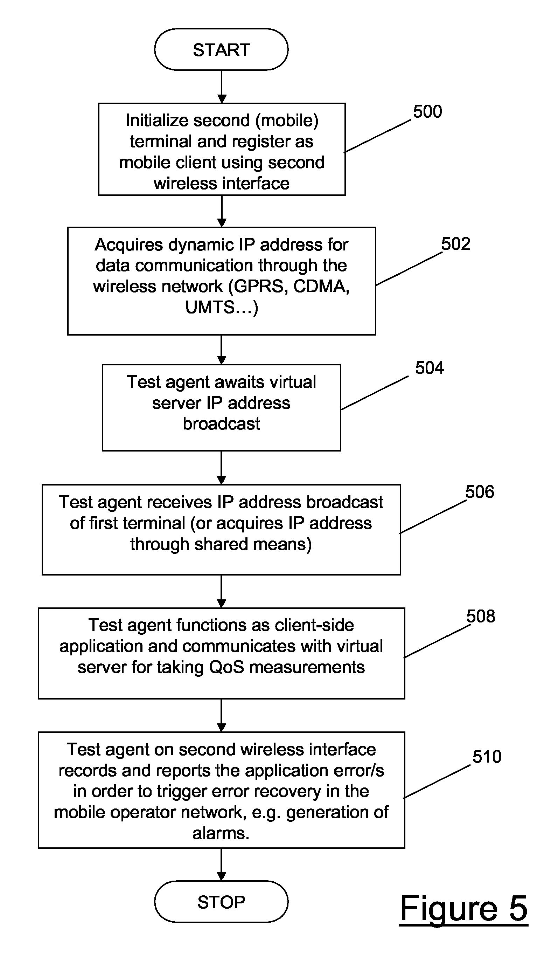

Turning to Figure 5, the second terminal 106 is powered-up and the active test agent is instantiated. Thereafter, the second terminal 106 registers (Step 500) with the communications network 102 as another mobile client terminal. The second terminal 106 then acquires (Step 502) another dynamic IP address from the network 102, and then awaits (Step 504) the broadcast of the dynamic IP address from the first terminal 104. Eventually, the second terminal 106 receives (Step 506) the broadcast dynamic IP address from the first terminal 104. Once the dynamic IP address has been received, the active test agent of the second terminal 106, believing the first terminal 104 to be a "live" PTT server supporting the PTT service, sends (Step 508) test messages to the first terminal 104 at the dynamic IP address broadcast by the first terminal 104. Consequently, referring back to Figure 4, upon receipt of at least one packet or a message from the active test agent of the second terminal 106, the first terminal 104, accesses a pre-cooked response or cached data and sends (Step 408) the pre-cooked response or cached data back to the second terminal 106, the pre-cooked response being stored by the first terminal 104 as an appropriate response to the at least one packet or message. However, in this example, the pre-cooked response and/or cached data is pre-configured (Step 410) to include the one or more errors.

Consequently, upon receipt of the pre-cooked response or cached data, containing the one or more errors, the active test agent of the second terminal 106 derives measurement data based upon the response received from the first terminal 104. Subsequently, the derived measurement data is, in this example, communicated by the active test agent of the second terminal 106 to a central Operations Support Systems (OSS) (not shown), or another monitoring and measurement central system (if available), in the network 102 for storage, generation of reports and/or further analysis thereof. Additionally, the active test agent recognises (Step 510) the one or more errors and generates an alert, which is also communicated to the central OSS.

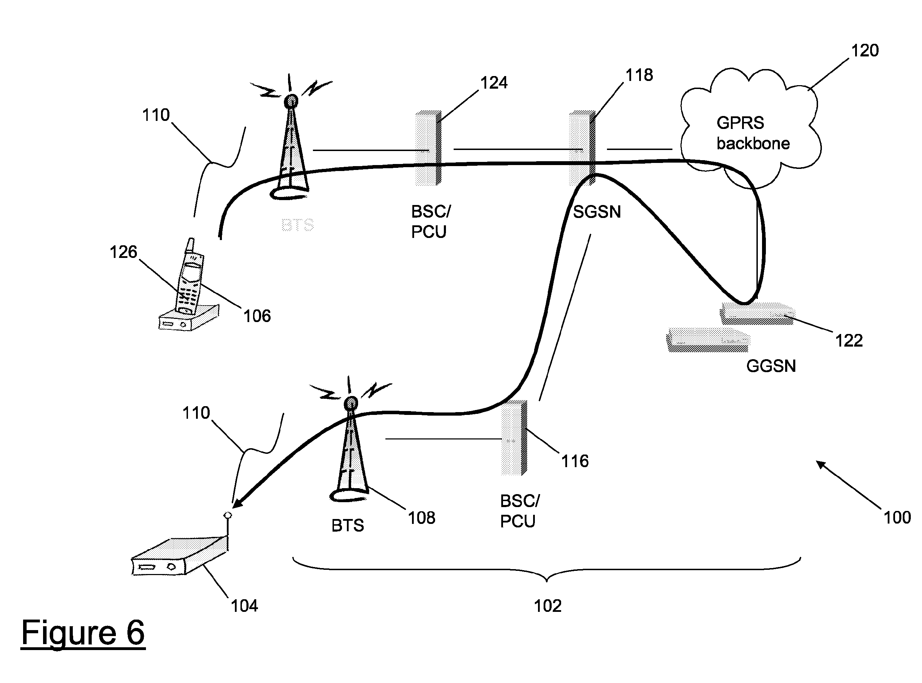

Turning to Figure 6, in a further embodiment operation of the first terminal 104 is modified as is described later herein. Additionally, the system 100 of Figure 1 is modified insofar as the active test agent of the second terminal 106 is not used and second terminal 106 is manually operated using, for example, an input device, such as a keypad 126.

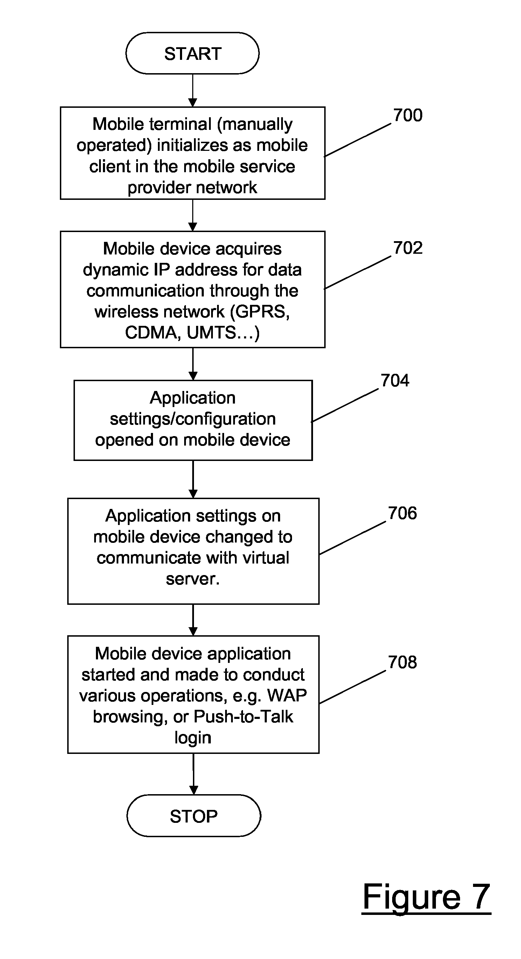

Referring to Figure 7, the second terminal 106 is powered-up and registers (Step 700) with the communications network 102 as a mobile client terminal. The second terminal 106 then acquires (Step 702) a dynamic IP address from the network 102. Following registration, the second terminal 106 then awaits an SMS message sent by the first terminal 104, the SMS message containing, inter alia, an IP address of the first terminal 104. A user then manually operates the second terminal 106 in order to access (Step 704) a settings/configuration option for an application relating to a communications service supported by the second terminal 106 to be investigated, for example a WAP browsing application or a PTT application. Once accessed, the user then changes (Step 706) the settings associated with the application in order to configure the application to use the first terminal 104 to support the communications service to be investigated.

The user then starts (Step 708) the application on the second terminal 106 and, using the keypad 126, initiates one or more operations of which the application is capable, resulting in one or more packet associated with the communications service being sent by the second terminal 106 to the first terminal 104.

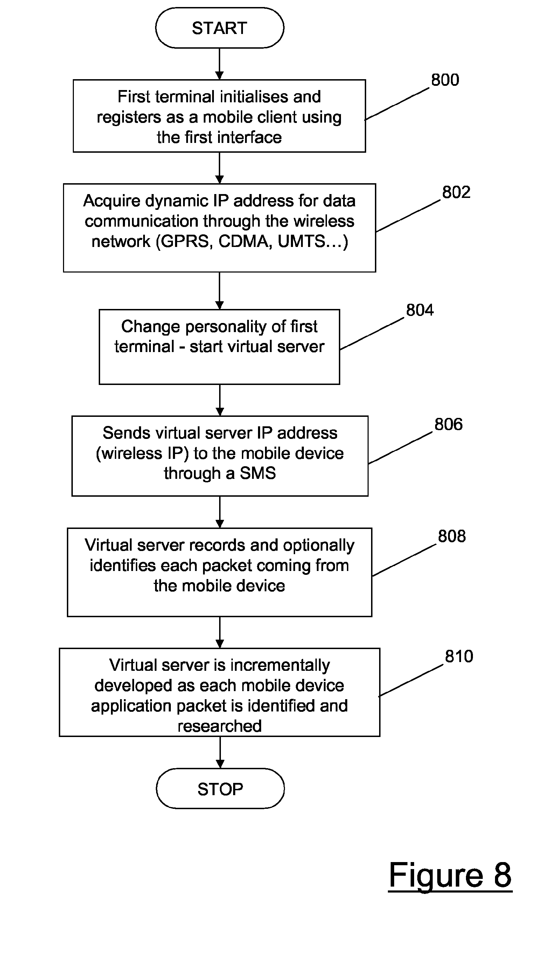

At the first terminal 104 (Figure 8), and prior to receiving packets from the second terminal 106, the first terminal 104 is powered-up and initialises (Step 800) as a mobile client terminal and registers with the network 102 as the mobile client terminal via the wireless interface 110. Thereafter, the first terminal 104 acquires (Step 802) a dynamic Internet Protocol (IP) address for data communication from the communications network 102 via the wireless interface 110. Once the dynamic IP address has been obtained, the first terminal 104, supported by its processing resource, changes "personality" (Step 804), i.e. no longer behaves as the client terminal. Instead, the first terminal 104 functions as the virtual or "thin" server for testing purposes. In this example, the first terminal 104 is used to investigate the PTT service mentioned above.

Once the first terminal 104 is functioning as the virtual server, the first terminal 104 communicates the dynamic IP address of the virtual server to the mobile device through the SMS containing the dynamic IP address as ASCII text (Step 806).

Reference herein to the communications network 102 should be understood to relate to a single communications network or a number of communications networks, one or more of said number of communications networks being capable of communication therebetween.

Although the above example has been described in the context of GSM/GPRS networks, the skilled person will appreciate that the above embodiments can be employed in relation to other communications networks, for example Universal Mobile Telecommunications System (UMTS) or Code Division Multiple Access (CDMA) networks.

The first terminal 104 is now ready to receive packets from the second terminal 106 and so awaits receipt of the one or more packet from the second terminal 106. Upon receipt (Step 808) of the one or more packet from the second terminal 106, the first terminal 104 records the one or more packets for subsequent analysis (Step 810) by an engineer, for example to develop a PTT virtual server of the type described above in relation to previous embodiments. Optionally, the first terminal 104 can initiate or continue further communication with the second terminal 106 depending upon an extent to which the virtual server application has been developed.

Reference herein to the communications network 102 should be understood to relate to a single communications network or a number of communications networks, one or more of said number of communications networks being capable of communication therebetween.

Although the above example has been described in the context of GSM networks, the skilled person will appreciate that the above embodiments can be employed in relation to other communications networks, for example Universal Mobile Telecommunications System (UMTS) or Code Division Multiple Access (CDMA) networks.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

## Claims

1. A monitoring system for monitoring a communications service, the system comprising:
a first communications terminal for attachment to a communications network , the first communications terminal being arranged to support, when in use, client-side functionality of a communications service to be tested; and
a second communications terminal for attachment to the communications network , the second communications terminal being arranged to emulate, when in use, a communications server at least sufficiently to receive a communication from the first communications terminal in relation to the communications service to be tested.

2. A system as claimed in Claim 1, wherein the second communications terminal is further arranged to support, when in use, server-side functionality of the communications service to be tested.

3. A system as claimed in Claim 1 or Claim 2, wherein the second communications terminal is further arranged to record, when in use, a protocol data unit received from the first communications terminal.

4. A system as claimed in any one of the preceding claims, wherein the first communications terminal supports a test application.

5. A system as claimed in Claim 4, wherein the test application is arranged to send at least one server-bound protocol data unit in relation to the communications service to be tested in order to measure a Quality of Service associated with the communications service to be tested.

6. A system as claimed in any one of the preceding claims, wherein the second communications terminal is arranged to emulate an error condition in relation to the communications service to be tested.

7. A system as claimed in any one of the preceding claims, wherein the first communications terminal is manually operated, when in use.

8. A system as claimed in any one of the preceding claims, wherein the second communications terminal is arranged to be responsive, when in use, to the first communications terminal with at least one pre-prepared response.

9. A system as claimed in any one of the preceding claims, wherein the second communications terminal is arranged to behave, when in use, at least in part as a client terminal in order to procure a network address for identification of the second communications terminal in the communications network.

10. A system as claimed in Claim 9, wherein the second communications terminal is arranged to modify behaviour thereof following procurement of the network address so as to emulate, when in use, the communications server.

11. A communications service emulation apparatus comprising:
an input arranged to receive, when in use, a communication relating to a communications service to be tested from a communications terminal attached to a communications network; and
a processing resource for attachment to the communications network, the processing resource being arranged to emulate, when in use, a communications server at least sufficiently to receive the communication.

12. An apparatus as claimed in Claim 11, wherein the processing resource is further arranged to communicate, when in use, a pre-prepared response to the communications terminal in response to the communication.

13. A method of monitoring a communications service, the method comprising the steps of:
interfacing a first communications terminal with a communications network ;
the first communications terminal supporting client-side functionality of a communications service to be tested;
interfacing a second communications terminal with the communications network; and
the second communications terminal emulating a communications server at least sufficiently to receive a communication from the first communications terminal in relation to the communications service to be tested.

14. A method as claimed in Claim 13, further comprising the step of:
the second communications terminal communicating a pre-prepared response to the first communications terminal in response to the communication.

15. A method of pre-deployment testing of a communications service comprising the method of monitoring a communications service as claimed in Claim 13 or Claim 14.

16. A computer program code element comprising computer program code means to make a computer execute the method as claimed in Claim 13 or Claim 14 or Claim 15.

17. A computer program code element as claimed in Claim 16, embodied on a computer readable medium.
